# EUROPÄISCHE PATENTSCHRIFT

(11) **EP 0 297 430 B1**
(45) Veröffentlichungstag und Bekanntmachung des Hinweises auf die Patenterteilung: **13.01.1993**
(21) Anmeldenummer: 88110001.0
(22) Anmeldetag: 23.06.1988
(51) Int. Cl.: B62D 49/06, B62D 55/02, B60K 17/04

(54) **Zug- oder Lastfahrzeug mit Freiraum zwischen den Hinterrädern**
Traction or load carrying vehicle provided with a free-space between the rear wheels
Véhicule de traction ou de charge comprenant un espace libre entre les roues arrières

(30) Priorität: 01.07.1987 CH 2497/87
(43) Veröffentlichungstag der Anmeldung: 04.01.1989
(73) Patentinhaber: Baltensperger, Eduard, CH-8311 Brütten (CH); Eicher, Kurt, D-8105 Regensdorf (DE)
(72) Erfinder: Baltensperger, Eduard, CH-8311 Brütten (CH)
(74) Vertreter: Frei, Alexandra Sarah

(56) Entgegenhaltungen:
- CH-A- 461 871
- DE-A- 2 018 070
- DE-A- 2 153 415
- DE-A- 2 811 370
- DE-A- 2 811 675
- FR-A- 2 542 156
- US-A- 2 994 392
- US-A- 3 154 164

## Beschreibung

Die Erfindung betrifft ein Zugfahrzeug.

Zugfahrzeuge, insbesondere Traktoren für die Land- oder Forstwirtschaft, werden seit Jahrzehnten eingesetzt. Obwohl die Anforderungen an diese Fahrzeuge und deren Einsatzbereiche erhebliche Wandlungen durchlaufen haben, wurde die althergebrachte Konstruktionsweise von solchen Traktoren bis heute im wesentlichen beibehalten.

War ursprünglich ein relativ hohes Eigengewicht der Traktoren noch erwünscht, da diese als reine Zugfahrzeuge eingesetzt wurden und somit die Hinterachse ausreichend belastet sein musste, so stellte sich in neuerer Zeit, insbesondere nach dem Aufkommen von direkt am Traktor aufgehängten Geräten, das Gewicht des Traktors und die Gewichtsverteilung als nachteilig heraus. Mittels Dreipunktaufhängungen bzw. hydraulischen Hebevorrichtungen werden heutzutage eine Vielzahl von Maschinen direkt hinten am Traktor angekoppelt und können im Betrieb auf den Boden abgesenkt oder während der Fahrt angehoben werden. Diese Arbeitsgeräte weisen zum Teil ein erhebliches Eigengewicht auf und führen damit zu einer zusätzlichen Belastung der Hinterachse des Traktors.

Werden sehr schwere Arbeitsgeräte hinten am Traktor aufgehängt, so besteht die Gefahr, dass dadurch eine Hebelwirkung und damit eine ungünstige Gewichtsverlagerung erfolgt, die zu einem Abheben der Vorderachse führen kann. Die heute übliche Gegenmassnahme besteht darin, dass zusätzliche Gewichte im Bereich der Traktor-Vorderachse angebracht werden und damit die vordere Achslast erhöht wird. Wohl vermag dies den Traktor zu stabilisieren und ein Abheben der Vorderachse zu verhindern, doch wird gleichzeitig das Gesamtgewicht des Traktors zusätzlich erhöht und damit ein sehr grosser Bodendruck verursacht. Oft wird wegen des grossen Gesamtgewichts ein Allradantrieb erforderlich um die Zugleistung zu erhöhen, doch vermag dieser das Zugvermögen nur unbedeutend zu verbessern, weil entsprechend der kurzen Bauweise von solchen Traktoren das Gewicht des Fahrzeuges wegen des Zugmomentes und der Gewichtsverteilung im Betrieb auf die hintere Achse verlagert wird.

Als Folge des Gewichts von Traktor und Zusatzgeräten und der damit verbundenen grossen Belastung insbesondere der Hinterachse wird der Boden entlang der Reifenspur stark zusammengepresst und geschädigt. Die Tätigkeit der Bodenlebewesen und Bakterien wird dadurch gestört und das Feld wird zusammengekarrt, so dass eine mangelnde Sauerstoffversorgung und ein gestörter Wasserhaushalt des Bodens resultieren. Wegen der zerstörten Kapillarität des Bodens ist der Wasserabfluss bei Regen und der Wasseraufstieg während Schönwetterperioden beeinträchtigt. Diese übermässige Belastung des Bodens führt letztlich dazu, dass das Pflanzenwachstum gestört ist, ein niedrigerer Ertrag erzielt wird und vermehrte Düngung sowie Schädlingsbekämpfungsmittel nötig werden. Damit wird eine zusätzliche Umweltbelastung verursacht, die durch Einsatz geeigneter Traktoren und Arbeitsgeräte vermieden werden könnte. Ausserdem ist das Fahrverhalten der so konstruierten Fahrzeuge sehr ungünstig und gefährlich; dies gilt wegen der ungenügenden Belastung der Vorderachse und damit schlechten Lenkbarkeit des Fahrzeuges insbesondere bei schneller Fahrt auf der Strasse.

Es ist Aufgabe der Erfindung, ein Zug- bzw. Lastfahrzeug zu schaffen, welches durch geeignete Gewichtsverteilung und Belastung der Hinterräder ein sicheres Fahrverhalten gewährleistet, ein geringes Gesamtgewicht von Fahrzeug und Arbeitsgeräten aufweist und bei hoher Wendigkeit und kleinen Abmessungen eine geringe Belastung des Bodens mit sich bringt.

Diese Aufgabe wird durch die im kennzeichnenden Teil des Patentanspruches 1 genannten Merkmale gelöst.

Das erfindungsgemässe Zugfahrzeug weist eine Hinterradbefestigung mit zwei Schenkein oder Längsholmen auf. Diese Hinterradbefestigung besteht vorzugsweise aus einer Querholmenkonstruktion und zwei die Räder tragende Längsholmen, die U-förmig angeordnet sind. Sie liegt vorzugsweise in einer im wesentlichen horizontalen Ebene und ist so orientiert, dass die Querholmenkonstruktion am hinteren Ende des Fahrzeugchassis befestigt ist und die beiden Längsholmen seitlich und parallel zur Fahrtrichtung nach hinten ragen. Die beiden Hinterräder sind an den freien Enden dieser beiden Längsholmen angebracht, so dass dementsprechend zwischen den Rädern ein Freiraum besteht. Dadurch wird es möglich ein Arbeitsgerät und/oder andere Vorrichtungen so am Fahrzeug anzukoppeln zu befestigen oder anzuhängen, dass deren Schwerpunkte vor oder nur knapp hinter die Hinterradachslinie zu liegen kommt. Dadurch kann eine Entlastung der Hinterräder und eine optimale Gewichtsverteilung bewirkt werden.

Gleichzeitig werden dadurch völlig neue Möglichkeiten für den Einsatz von Arbeitsgeräten oder zusätzlichen Antriebsvorrichtungen geschaffen. Die Vorteile der Erfindung kommen insbesondere bei einer kurzen Bauweise des Zugfahrzeuges zum tragen, da dann die Gefahr eines Abhebens der Vorderachse besonders akut ist. Diese verbesserte Verteilung der Achslasten bringt des weiteren eine Erhöhung der Verkehrssicherheit durch ein verbessertes Fahrverhalten des Traktors in schneller Fahrt, insbesondere im Strassenverkehr, mit sich.

Ausführungsbeispiele der Erfindung sind anhand der nachfolgenden Zeichnungen näher beschrieben.
- Fig. 1: zeigt einen Traktor herkömmlicher Bauweise
- Fig. 2: zeigt einen erfindungsgemässen Traktor mit U-förmiger Hinterradbefestigung
- Fig. 3: zeigt einen Traktor mit U-förmiger Hinterradbefestigung und einer Dreipunktaufhängung
- Fig. 4: zeigt einen Traktor mit U-förmiger Hinterradbefestigung und einem zusätzlichen Antriebsraupe
- Fig. 5: zeigt einen Traktor mit U-förmiger Hinterradbefestigung und einer vor der Hinterradachslinie liegenden Sattelkupplung
- Fig. 6a: zeigt einen Traktor mit U-förmiger Hinterradbefestigung und einer zwischen den Hinterrädern aufgehängten Doppelseilwinde
- Fig. 6b: zeigt einen Traktor mit U-förmiger Hinterradbefestigung und einem zwischen den Hinterrädern montierten Düngerstreuer
- Fig. 6c: zeigt einen Traktor mit U-förmiger Hinterradbefestigung und einer zwischen den Hinterrädern aufgehängten Feldspritze
- Fig. 7: zeigt einen Traktor mit U-förmiger Hinterradbefestigung und einer Heck-Ladeschaufel
- Fig. 8: zeigt die Hinterradbefestigung mit einem integrierten Antrieb im Querschnitt
- Fig. 9a: zeigt einen Längsschnitt durch einen Hinterradantrieb mit einer Kette mit im Rad integrierter Planetenuntersetzung
- Fig. 9b: zeigt einen Längsschnitt durch einen hinterradantrieb mit einer Kette und einer Untersetzung mittels Innenritzel
- Fig. 10: zeigt einen Längsschnitt durch einen Hinterradantrieb mit Zahnrädern
Obwohl im folgenden bei der Erfindungsbeschreibung im wesentlichen nur auf einen Traktor Bezug genommen wird, ist der erfindungsgemässe Aufbau des Fahrzeuges für alle Arten von Zug- und Lastfahrzeugen einsetzbar.

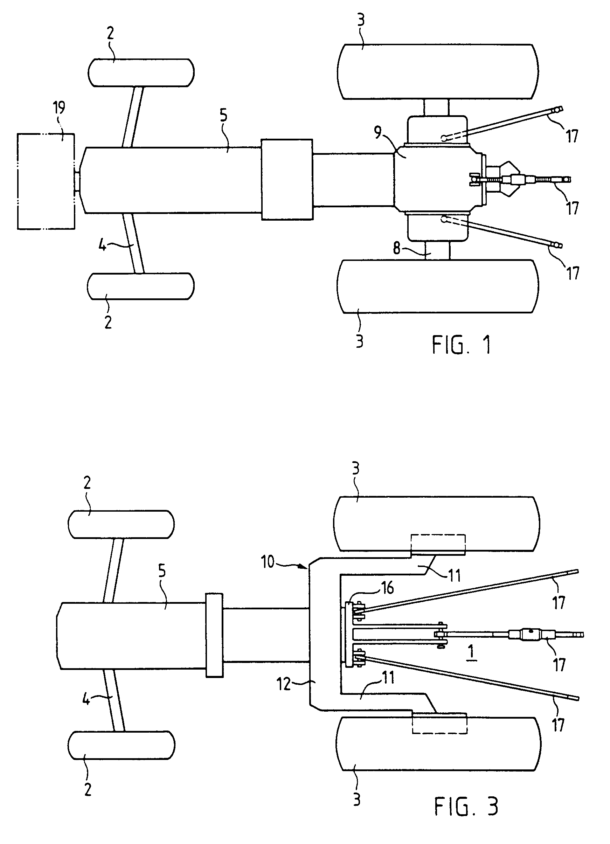

In Figur 1 ist ein herkömmlicher Traktor in der Ansicht von oben dargestellt. Gut erkennbar ist das Chassis mit dem Motoraufbau 5, die massive Hinterachse 8 und der Hinterradantriebsblock 9. Die Konstruktion eines solchen Traktors führt zu einer ungleichen Gewichtsverteilung auf die Achsen mit ca. einem Drittel des Gewichtes auf der Vorder- und zwei Dritteln des Gewichtes auf der Hinterachse 8. Wird, wie dies in Figur 1 ersichtlich ist, beispielsweise eine Dreipunktaufhängung mit drei Gelenkarmen 17, welche mit einer nicht näher dargestellten hydraulischen Hebevorrichtung in vertikaler Richtung bewegt werden kann, vorgesehen, so muss diese zwangsläufig hinter dem Hinterradantriebsblock 9 angeordnet werden. Dies führt jedoch zu einer zusätzlichen Gewichtsverlagerung, da ein an diesen Gelenkarmen 17 befestigtes Arbeitsgerät eine Hebelwirkung bezüglich der Hinterachse ausübt, die Vorderräder 2 entlastet werden und damit zusätzliches Gewicht auf den Hinterrädern 3 lastet. Als Folge davon werden die Auflagepunkte der Hinterräder 3 einen grossen Druck auf das Erdreich ausüben und die Erdstruktur, d.h. sowohl die Kapillarität des Bodens als auch kleine und kleinste Bodenlebewesen zerstören. Die oft zur Erhöhung der Stabilität bzw. zur besseren Lenkbarkeit des Traktors vorgesehenen Zusatzgewichte 19 im Frontbereich des Traktors ändern dabei nichts an der starken Belastung der Hinterräder 3 und vermögen diese nicht zu entlasten. Vielmehr wird dadurch das Gesamtgewicht des Traktors erhöht, was zu einer zusätzlichen Bodenbelastung führt.

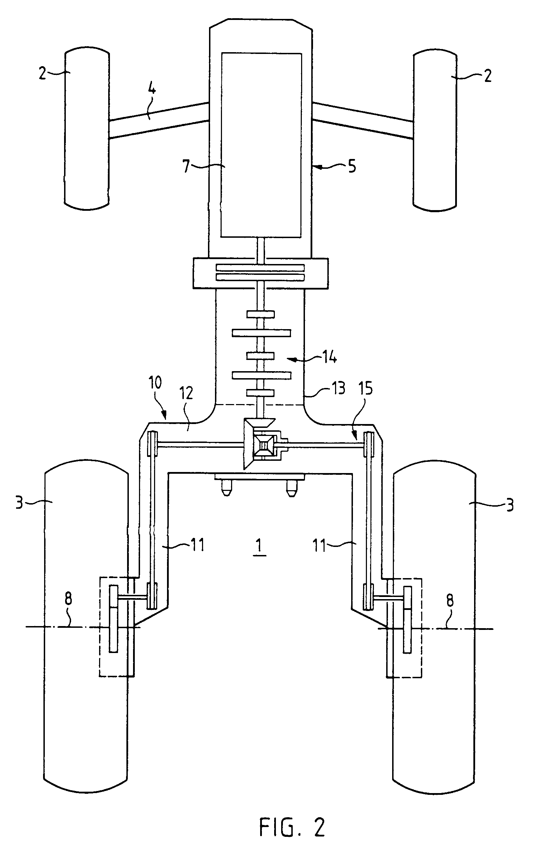

In Figur 2 ist ein erfindungsgemässer Traktor schematisch von oben dargestellt. Ähnlich wie bei herkömmlichen Traktoren ist hier ein Motoraufbau 5 mit einem Motor 7 vorhanden. Ein Getriebeblock 14 ist schematisch angedeutet. Das Fahrzeug kann sowohl einen blossen Hinterrad- als auch einen Allradantrieb besitzen. Die beiden Hinterräder 3 sind nicht wie allgemein üblich auf einer starren, gemeinsamen Antriebs-Achse gelagert, sondern sind an zwei seitlichen Schenkeln oder Längsholmen 11 einer Hinterradbefestigung 10 gelagert. Eine herkömmliche Achsanordnung ist mithin nicht mehr gegeben, sondern diese Hinterradbefestigung übernimmt sowohl Funktionen eines Chassis als auch einer Achse. Diese Radbefestigung 10 enthält vorzugsweise eine Querholmenkonstruktion 12 und zwei seitliche Längsholmen 11 und weist insgesamt eine im wesentlichen U-förmige Gestalt auf. Die Querholmenkonstruktion 12 ist starr mit dem hinteren Ende 13 des Fahrzeugchassis verbunden. Sowohl die Querholmenkonstruktion 12 als auch die Längsholmen 11 sind innen hohl und sind als verwindungsfestes, tragfähiges Gehäuse ausgebildet. Die beiden Hinterräder sind an den freien Enden der Längsholmen 11 gelagert und werden über einen im Innern der Radbefestigung 10 vorgesehenen Antrieb 15 angetrieben. Der Hohlraum der Querholmenkonstruktion 12 bietet dabei genügend Platz für einen Quergetriebe 14 (Tellerrad und Differential). Die Breite der Querholmenkonstruktion 12 bestimmt dabei den Abstand der Hinterräder 3. Zwischen den Hinterrädern bleibt dank den seitlichen, im Abstand voneinander nach hinten ragenden Längsholmen 11 ein Freiraum 1 bestehen, der im dargestellten Beispiel im Grundriss ungefähr rechteckig ist. Die U-förmige Radbefestigung 10 ist vorzugsweise liegend, d.h. annähernd parallel zu einer horizontalen Ebene angeordnet. Die beiden seitlichen Längsholmen oder Schenkel 11 sind so lang, dass ihr Ansatzpunkt am Fahrzeugchassis oder an der Querholmenkonstruktion 12 vor oder im Bereich der Vorderkanten der Hinterräder 3 liegt. Der Freiraum 1 zwischen den Hinterrädern kann durch geeignete Wahl der Länge der Längsholmen oder Schenkel 11 und durch deren seitlichen Abstand bestimmt werden, wobei wegen den bei der Fahrt auftretenden Belastungen und der dadurch erforderlichen Materialstärke der Radbefestigung 10 praktische Limiten gegeben sind. Der Radstand beträgt ungefähr gleich viel wie bei herkömmlichen Traktoren, obwohl die nach hinten ragenden Längsholmen oder Schenkel 11 vorgesehen sind. Dies ist möglich, da bisher das Kupplungsgehäuse verlängert und auch weitere Bauteile zu gross dimensioniert wurden, um die notwendige Baulänge der Traktoren zu erreichen. Da bei dem erfindungsgemässen Traktor jedoch eine kompakte Bauweise angestrebt wird, kann auf ein grosses Kupplungsgehäuse verzichtet und damit der gewohnte Radstand erzielt werden. Der zwischen den Hinterrädern liegende Freiraum 1 ermöglicht den An- bzw. Aufbau von Arbeitsgeräten oder anderen Vorrichtungen oder das Ankuppeln von Zusatzgeräten oder Anhängern. Diese Konstruktionsweise erlaubt ein Verschieben des Schwerpunktes der so vorgesehenen Geräte oder Gewichte in Fahrtrichtung und bewirkt damit eine gleichmässigere Gewichtsverteilung auf Vorder- und Hinterachse des Fahrzeuges.

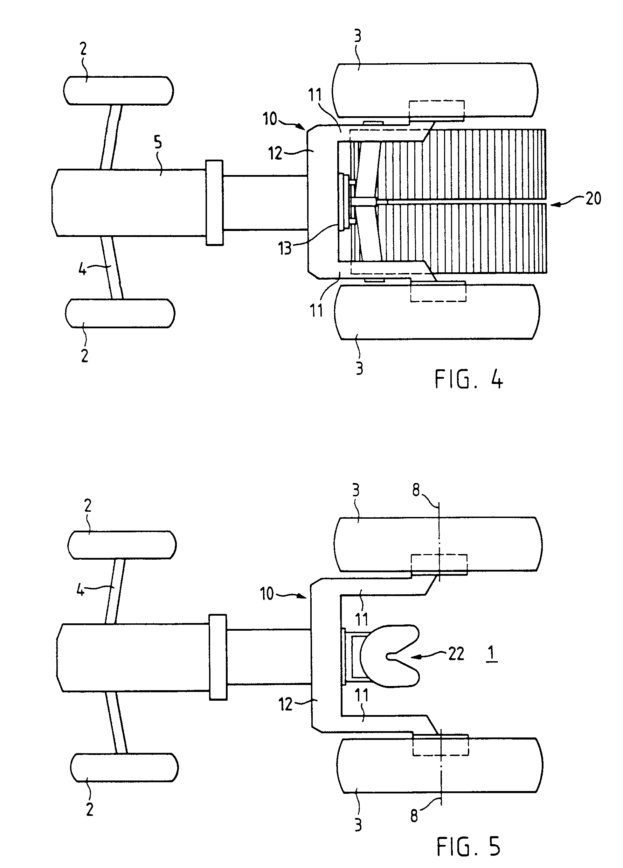

Figur 3 zeigt ein Ausführungsbeispiel eines Traktores mit einer Dreipunktaufhängung für die Montage von beispielsweise Landwirtschaftsgeräten. An einem Trägerprofil 16 sind drei Gelenkarme 17 gelenkig befestigt. Ein Vergleich mit Figur 1, in welcher ein herkömmlicher Traktor mit Dreipunktaufhängung dargestellt ist, lässt erkennen, dass bei bezüglich den Radachsen gleicher Lage der nicht näher dargestellten Arbeitsgeräte, welche an den freien Enden der Gelenkarme 17 befestigt werden, beim erfindungsgemässen Traktor längere Gelenkarme zum Einsatz kommen. Dies hat den Vorteil, dass eine wesentlich grössere Bewegungsfreiheit erzielt wird, d.h. sowohl die seitliche Ausschwenkmöglichkeit als auch die Bewegung in vertikaler Richtung werden erhöht. Dadurch besteht nun auch die Möglichkeit, lange Geräte oder Gerätekombinationen mittels einer hier nicht dargestellten hydraulischen Hebevorrichtung hoch anzuheben, was bisher mangels genügender Bewegungsfreiheit unmöglich war. Der Einsatz von langen Gelenkarmen hätte bei herkömmlichen Traktoren zur Folge, dass die Arbeitsgeräte weit hinter das Fahrzeug zu liegen kämen und dieses damit erheblich an Wendigkeit sowie Fahrstabilität einbüssen würde.

Figur 4 zeigt ein Ausführungsbeispiel eines Traktors mit einer neuartigen Antriebsmöglichkeit für den Einsatz des Traktors bei großen Zugbelastungen. Am hinteren Ende 13 des Fahrzeugchassis wird eine Antriebsraupe 20 angekoppelt, welche im wesentlichen zwischen die beiden Hinterräder 3 zu liegen kommt. Dabei wird beispielsweise eine Schubaggregat entsprechend der europäischen Patentanmeldung Nr. 85107772.7 mit einem dort ebenfalls beschriebenen Antrieb verwendet. Diese Raupe bzw. das Schubaggregat 20 ist in Längsrichtung des Fahrzeuges so plaziert, dass dessen mittlere Achse mit den Hinterradachslinie zusammenfällt oder annähernd bei diesen liegt. Damit ist gewährleistet, dass die Lenkbarkeit des Fahrzeuges nicht beeinträchtigt ist, da beim Lenken und Drehen des Fahrzeuges sowohl die Hinterräder als auch die Antriebsraupe 20 im wesentlichen auf einer gemeinsamen, quer zur Fahrtrichtung verlaufenden Linie liegen. Durch Verwendung einer solchen Antriebsraupe 20 kann der relative leichte Traktor in kürzester Zeit zu einem leistungsstarken und sehr zugkräftigen Traktor umgerüstet werden. Dies bringt insbesondere für die Landwirtschaft grosse Vorteile, da hier von Traktoren sehr vielfältige Einsatzmöglichkeiten gefordert werden und aus diesem Grunde bis anhin meist zwei Traktoren benötigt wurden um alle Arbeitsbereiche abzudecken. Durch die zusätzliche Auflagefläche der Antriebsraupe 20 kann der maximale Bodendruck, der auf den Hinterrädern lastet, reduziert werden und gleichzeitig das Zugvermögen gesteigert werden, was insbesondere beim Pflügen, Eggen oder bei schweren Erntearbeiten vorteilhaft ist. Bei heiklen Arbeiten, wie z.B. die Saatbeetaufbereitung, kann durch die Verwendung der Raupe eine Verdichtung des Bodens vermieden werden. Da die Raupe mit einer Gesamthöhe von nur ca. 50 cm ausgeführt werden kann, besteht die Möglichkeit, gleichzeitig zusätzliche Geräte wie beispielsweise Dreipunktaufhängungen, Anhängerkupplungen, Heckladeschaufeln etc. zu verwenden.

In Figur 5 ist der Erfindungsgegenstand mit einer Sattel-Kupplung 22 dargestellt. Der Vorteil der erfindungsgemässen Hinterradbefestigung besteht darin, dass schwere Einachsanhänger, wie beispielsweise Ladewagen, nicht wie bisher hinter der Hinterradachse des Traktors, sondern über dieser oder sogar, wie dies in der Abbildung ersichtlich ist, vor den Antriebsachslinie 8 angekoppelt und abgestützt werden können. Auf diese Weise kann eine wesentlich grössere Sattellast vom ziehenden Traktor aufgenommen werden, ohne dass dessen Vorderachse 4 entlastet und das Gefährt dadurch lenkungsunfähig würde. Zudem ist es möglich, die Achse des Anhängers zu entlasten, indem eine Lastübertragung auf den Traktor erfolgt. Diese verbesserte Verteilung der Achslasten bringt insgesamt eine Erhöhung der Verkehrssicherheit durch ein verbessertes Fahrverhalten sowie Bremsvermögen des Traktors in schneller Fahrt, insbesondere im Strassenverkehr, mit sich.

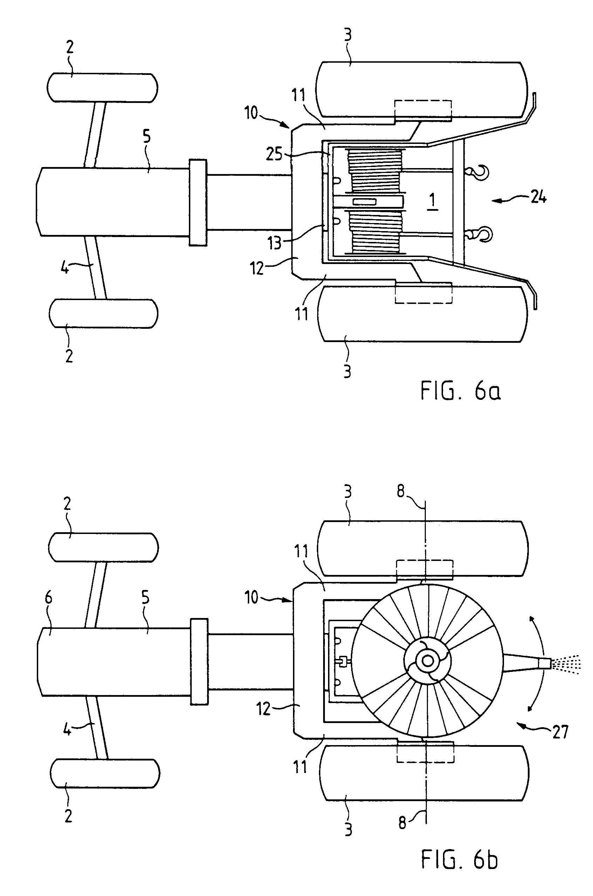

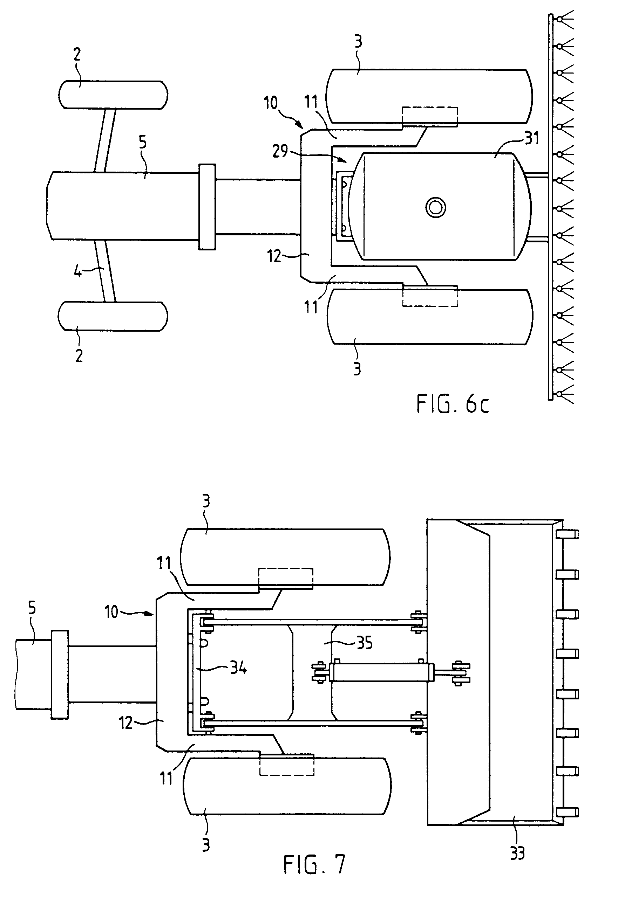

Figur 6a, 6b und 6c zeigen ein erfindungsgemässes Fahrzeug mit aufgebauten Arbeitsgeräten. In den drei dargestellten Beispielen ist ersichtlich, dass der zwischen den Hinterrädern 3 vorhandene Freiraum für die oft voluminösen und schweren Arbeitsgeräte genutzt werden kann. Eine Doppelseilwinde 24, wie sie beispielsweise in der Forstwirtschaft verwendet wird, ist mittels einer Aufhängevorrichtung 25 am hinteren Ende 13 des Traktores befestigt. Der Schwerpunkt der oft schweren Seilwinden kommt dadurch vor die imaginäre Hinterradachse zu liegen und führt zu einer gleichmässigen Gewichtsverteilung auf die Vorder- und Hinterräder. Gleichzeitig wird eine bessere Kraftübertragung der Zuglast auf den Schlepper erreicht, so dass im Einsatz ein wesentlich grösseres Drehmoment als bis anhin über die Räder übertragen werden kann, was insbesondere bei schweren Zuglasten oder in Steigungen von Bedeutung ist.

Eine weitere Einsatzmöglichkeit ist in Figur 6b dargestellt. Hier liegt ein Düngerstreuer 27 zwischen den beiden Hinterrädern 3. Der vielfach im beladenen Zustand bis über 500 Kilo schwere Streuer 27 muss nicht mehr wie bisher weit hinter der Radachse montiert werden. Dadurch entfallen auch die Zusatzgewichte 19 (Fig. 1), die üblicherweise an der Front 6 des Traktors angebracht werden mussten, da wegen der in Fahrtrichtung nach vorne versetzten Lage des Streuer-Schwerpunktes keine Hebelwirkung bezüglich der Hinterradachse auftritt. Das Gewicht des Düngerstreuers lastet direkt auf oder vor der Achse der Hinterräder, was gleichzeitig zu einem guten Fahrverhalten führt.

In ähnlicher Weise kann eine Feldspritze 29, wie sie in Figur 6c dargestellt ist, am Traktor angebracht werden. Der Spritzbrühebehälter 31 mit einigen hundert bis über tausend Liter Inhalt kommt in eine günstige Lage im Bereich zwischen den Hinterrädern 3 zu liegen. Neben der durch die bessere Gewichtsverteilung bewirkten Verringerung des Bodendruckes kann auch die Gesamtlänge des Traktors mit angebauter Feldspritze gegenüber herkömmlichen Fahrzeug-Geräte-Kombinationen verringert und dadurch eine grössere Wendigkeit erreicht werden. Gegenüber den bisher zur besseren Lastverteilung zum Teil verwendeten Fahrzeugen mit Ladebrücken oder ähnlichen Aufbauten für den Aufbau von Arbeitsgeräten über der Hinterradachse kann durch die erfindungsgemässe Bauweise eine wesentlich geringere Gesamthöhe erreicht werden, indem der Raum zwischen den grossen Hinterrädern in idealer Weise ausgenützt wird.

Figur 7 zeigt einen erfindungsgemässen Traktor mit einer angebauten Heck-Ladeschaufel 33. Bei herkömmlichen Traktoren war der Anbau einer solchen Ladeschaufel hinter dem Traktor wegen des Achsblockes 9 (Fig. 1) nicht möglich. Der mit vielen Nachteilen behaftete bisher übliche Frontlader kann dank der Erfindung durch eine bessere und leistungsfähigere Konstruktion ersetzt werden. Mittels einer Montagevorrichtung 34 wird eine hydraulisch bewegbare Aufhängevorrichtung 35 hinten am Traktorchassis befestigt. Zur Erhöhung der Adhäsion und Verringerung des Bodendruckes kann auch hier gleichzeitig mit der Ladeschaufel eine Antriebsraupe 20 (Fig. 4) verwendet werden. Dies ermöglicht ohne weiteres Aushubarbeiten in ähnlicher Weise wie mit Baumaschinen. Solche Arbeiten waren mit herkömmlichen Frontladern wegen der durch die Gewichtsverteilung bedingten Belastungen nicht möglich. Zudem besteht die Möglichkeit gegenüber Frontladern wesentlich grössere Schaufeln zu verwenden und damit die Ladekapazität bzw. die Kubikmeter-Leistung wesentlich zu erhöhen.

Der Freiraum zwischen den Hinterrädern ermöglicht das Ankoppeln von weiteren Hilfsvorrichtungen oder Arbeitsgeräten oder das Ankuppeln von Anhängern oder anderen Maschinen. Ebenso besteht die Möglichkeit, irgendwelche andere sperrige Lasten, Geräte oder Ladepritschen zwischen den Hinterrädern aufzubauen. Dabei können die Montagevorrichtungen, Kupplungen oder sonstigen Hilfsvorrichtungen direkt am Fahrzeugchassis oder an der Radbefestigung 10 vorgesehen werden.

Selbstverständlich kann die Radbefestigung 10 auch eine gegenüber der U-Form abweichende Form aufweisen. So kann insbesondere die Querholmenkonstruktion entfallen und zwei von einem Punkt ausgehende Schenkel 11 vorgesehen werden. Des weiteren kann für spezielle Anwendungen die Querholmenkonstruktion 12 noch breiter und stabiler ausgeführt sein, so dass die nach hinten ragenden Längsholmen 11 an der Aussenseite der Hinterräder liegen und deren Radachsen 8 in diesen Längsholmen 11 gelagert und nach innen gerichtet sind. Dadurch wird es möglich, Arbeitsgeräte oder Hilfsvorrichtungen auch an der Aussenseite der Hinterräder an den Längsholmen 11 zu befestigen oder abzustützen. Des weiteren können die Längsholmen 11 an ihrem freien Ende auch gegabelt sein, wobei die Hinterräder je zwischen diesen Gabeln liegen.

Um eine ausgeglichene Belastung der Längsholmen bzw. Schenkel 11 zu erreichen und bei entsprechender Konstruktion des Fahrzeugchassis, kann die Radbefestigung 10 auch gegenüber der horizontalen Lage geneigt sein und beispielsweise schräg nach hinten verlaufen. Ausserdem kann bei entsprechender Ausgestaltung des Chassis die Querholmenkonstruktion entfallen bzw. in das Chassis integriert und die Längsholmen direkt am Chassis angesetzt sein.

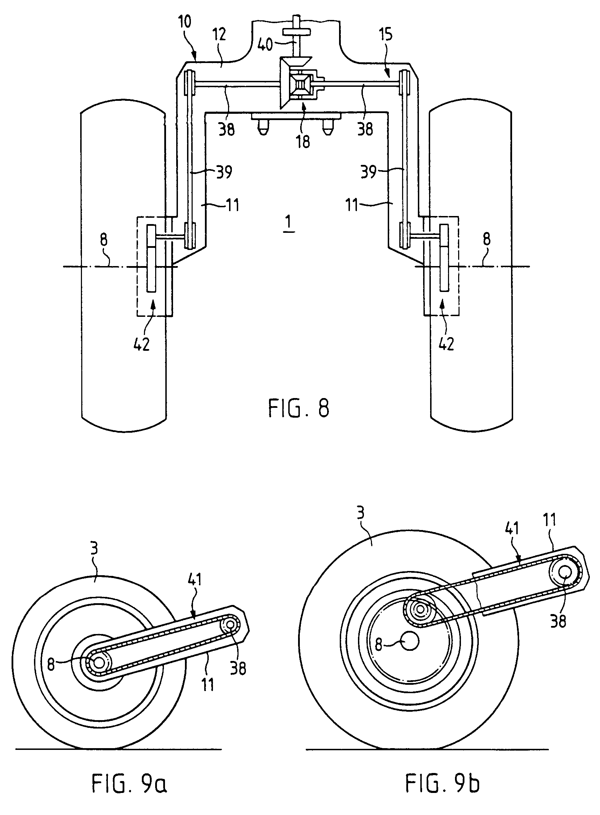

Ein möglicher Antrieb 15 der Hinterräder 3 ist schematisch in Figur 8 dargestellt. Im Innern der Querholmenkonstruktion 12 befindet sich ein Quergetriebe (Tellerrad und Differential) 18, das über eine Antriebswelle 40 und ein Schaltgetriebe 14 mit dem Motor 7 verbunden ist (vgl. Fig. 1). Über Wellen 38 und weitere Antriebselemente 39, vorzugsweise einen Kettenantrieb, erfolgt der Antrieb der beiden Hinterräder 3. Eine Untersetzung 42 ist je an den Enden der Längsholmen 11 vorgesehen. Vorzugsweise ist diese Untersetzung so angeordnet, dass sie in den freien Bereich der Hinterräder 3 hineinragt.

Zwei mögliche Ausführungsvarianten von Kettenantrieben 41 sind in den Figuren 9a und 9b dargestellt. Da die Längsholmen 11 insbesondere beim Befahren von unebenem Gelände grösseren Belastungen ausgesetzt sind und dadurch Verwindungen auftreten können, ist der Einsatz von Kettenantrieben vorteilhaft. Dadurch können die mechanische Belastungen bei der Kraftübertragung von den Wellen 38 auf die Hinterradachsen 8 vermieden bzw. ausgeglichen werden. Ausserdem weisen solche Kettenantriebe relativ geringe Kraftverluste von ca. 1% auf. Dabei können Ketten mit Innenritzel (Fig. 9b) oder einem Planetgetriebe (Fig. 9a) zur Anwendung kommen.

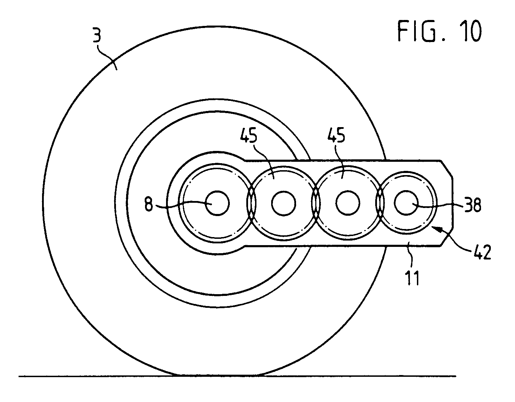

Bei genügender Festigkeit der Gehäusewand der Längsholmen 11 kann zum Antrieb der Hinterräder 3 auch ein Zahnradantrieb 42, wie in Figur 10 dargestellt, verwendet werden. Durch eine Mehrzahl von Stirnzahnrädern 45 erfolgt die Kraftübertragung von den Wellen 38 auf die Hinterradachsen 8.

Eine weitere Ausführungsvariante der Erfindung verwendet einen hydrostatischen Antrieb für die Hinterräder 3 oder bei einem Allradantrieb auch für die Vorderräder. Die notwendigen Verbindungsleitungen werden im Innern der Hinterradbefestigung 10 oder allenfalls entlang von diesen zu den entsprechenden Untersetzungen 42 geführt.

Vorzugsweise werden sowohl die Getriebegehäuse und die Hinterradbefestigung 10 als auch der Antrieb 15 in Leichtbauweise ausgeführt. Dies ermöglicht ein geringes Gesamtgewicht des Fahrzeuges. Da die Gewichtsverteilung durch die erfindungsgemässe Hinterradbefestigung 10 nicht mehr wie bisher vor allem auf den Hinterrädern lastet, ist durch ein kleines Fahrzeuggewicht die Zugleistung nicht beeinträchtigt. Für grosse Zugleistungen besteht ausserdem die obenerwähnte Möglichkeit eines zusätzlichen Schubaggregates.

## Patentansprüche

1. Traktor mit Hinterrad- und/oder Allradantrieb, **dadurch gekennzeichnet,** dass er, zur Verlegung des Anhängepunktes für Arbeitsgeräte bei im wesentlichen gleichen Achslinienabstand zwischen die Achslinien des Vorder- und Hinterradpaares, zwei an der Motor/Getriebeblock-Einheit angeflanschte, gabelförmig gegen hinten ausgerichtete, starre Holmen aufweist, an welchen die Hinterräder angeordnet sind, und dass die angeflanschten Holmen Kraftübertragungsmittel zu den Hinterrädern aufweisen, sodass zwischen den Holmen und vor der Achslinie des Hinterradpaares Befestigungsmittel für Arbeitsgeräte angeordnet werden können.

2. Traktor nach Anspruch 1, **dadurch gekennzeichnet,** dass die angeflanschten Holmen durch eine am Fahrzeugheck befestigte Querholmenkonstruktion (12) und zwei an deren seitlichen Enden befestigten seitlichen Längsholmen (11) gebildet wird.

3. Traktor nach Anspruch 1 oder 2, **dadurch gekennzeichnet,** dass die Hinterräder (3) an der Innenseite der Schenkel oder Längsholmen (11) liegen.

4. Traktor nach Anspruch 1 oder 2, **dadurch gekennzeichnet,** dass die Hinterräder (3) an der Aussenseite der Schenkel oder Längsholmen (11) liegen.

5. Traktor nach einem der vorstehenden Ansprüche, **dadurch gekennzeichnet,** dass die beiden seitlichen Längsholmen oder Schenkel (11) so lang sind, dass ihr Ansatzpunkt am Fahrzeugchassis oder an der Querholmenkonstruktion (12) vor oder im Bereich der Vorderkanten der Hinterräder (3) liegt.

6. Traktor nach einem der vorstehenden Ansprüche, **dadurch gekennzeichnet,** dass die beiden seitlichen Längsholmen (11) mindestens annähernd parallel zur Fahrzeugslängsrichtung nach hinten verlaufen.

7. Traktor nach einem der vorstehenden Ansprüche, **dadurch gekennzeichnet,** dass angeflanschten Holmen ausgehend vom Fahrzeugheck mindestens annähernd horizontal nach hinten verlaufen.

8. Traktor nach einem der vorstehenden Ansprüche, **dadurch gekennzeichnet,** dass die Längsholmen, Schenkel (11) und die Querholmenkonstruktion (12) der Radbefestigung (10) einen Hohlraum zur Aufnahme einer Antriebsvorrichtung (15) aufweisen.

9. Traktor nach Anspruch 2 und 6, **dadurch gekennzeichnet,** dass der Hohlraum der Querholmerkonstruktion (12) so gross ist, dass ein Getriebe (18) darin eingebaut werden kann.

10. Traktor nach einem der vorstehenden Ansprüche, **dadurch gekennzeichnet,** dass die Getriebegehäuse sowie der Antrieb (15) in Leichtbauweise ausgeführt sind.

11. Traktor nach einem der vorstehenden Ansprüche, **dadurch gekennzeichnet,** dass zwischen den Hinterrädern eine Antriebsraupe oder ein Schubaggregat (20) angeordnet ist, wobei dieses in Längsrichtung so plaziert ist, dass dessen mittlere Achse mit den Hinterradachsen zusammenfällt oder annähernd bei diesen liegt, so dass die Lenkbarkeit des Fahrzeuges nicht beeinträchtigt ist.

12. Traktor nach einem der vorstehenden Ansprüche, **dadurch gekennzeichnet,** dass die Querholmenkonstruktion (12) im Chassis integriert ist.

13. Traktor nach einem der vorstehenden Apsprüche, **dadurch gekennzeichnet,** dass am Fahrzeugchassis und/oder an der Radbefestigung (10) Montageeinrichtungen für das Ankoppeln oder Befestigen der Hilfsvorrichtungen (17, 20, 24, 27, 31, 33) vorgesehen sind.

14. Traktor nach einem der vorstehenden Ansprüche, **dadurch gekennzeichnet,** dass der Antrieb (15) der Hinterräder (3) als Kettenantrieb ausgebildet ist, wobei diese Ketten im Innern der beiden Längsholmen bzw. Schenkel (11) liegen.

15. Traktor nach einem der Ansprüche 1 bis 14, **dadurch gekennzeichnet,** dass die Hinterräder (3) mittels Ölmotoren hydrostatisch angetrieben werden.

## Claims

1. Tractor with rear and/or four-wheel drive, characterized in that, for displacing the attachnent point for working implements with substantially the same axial spacing between the axes of the front and rear wheel pair, it has two fork-like, rearwardly oriented, rigid beams flanged to the engine/gear block unit and on which are located the rear wheels and that the flanged beams have power transmission means to the rear wheels, so that between the beams and upstream of the axis of the rear wheel pair, it is possible to position fixing means for working implements.

2. Tractor according to claim 1, characterized in that the flanged beams are formed by a transverse beam construction (12) fixed to the vehicle tail and two lateral longitudinal beams (11) fixed to its lateral ends.

3. Tractor according to claims 1 or 2, characterized in that the rear wheels (3) are located on the inside of the legs or the longitudinal beams (11).

4. Tractor according to claims 1 or 2, characterized in that the rear wheels (3) are located on the outside of the legs or the longitudinal beams (11).

5. Tractor according to one of the preceding claims, characterized in that the two lateral longitudinal beams or legs (11) are sufficiently long that their attachnent point to the vehicle chassis or to the transverse beam construction (12) is located upstream or in the vicinity of the leading edges of the rear wheels (3).

6. Tractor according to one of the preceding claims, characterized in that the two lateral longitudinal beams (11) run rearwards at least approximately parallel to the vehicle longitudinal direction.

7. Tractor according to one of the preceding claims, characterized in that starting from the vehicle tail, the flanged beams run at least approximately horizontally rearwards.

8. Tractor according to one of the preceding claims, characterized in that the longitudinal beams, legs (11) and transverse beam construction (12) of the wheel fastening (1) have a cavity for receiving a drive mechanism (15).

9. Tractor according to claims 2 and 6, characterized in that the cavity of the transverse beam construction (12) is sufficiently large that a gear (18) can be installed therein.

10. Tractor according to one of the preceding claims, characterized in that the gear hox and the drive (15) have a lighweight construction.

11. Tractor according to one of the preceding claims, characterized in that between the rear wheels is positioned a drive caterpillar or a thrust unit (2)0, it being longitudinally positioned in such a way that its central axis coincides with the rear wheel axes or is approximately located thereat, so that the steerability of the vehicle is not impaired.

12. Tractor according to one of the preceding claims, characterized in that the transverse beam construction (12) is integrated into the chassis.

13. Tractor according to one of the preceding claims, characterized in that on the vehicle chassis and/or on the wheel fastening (10) are provided fitting devices for the coupling or fixing of auxiliary means (17, 20, 24, 27, 31, 33).

14. Tractor according to one of the preceding claims, characterized in that the drive (15) of the rear wheels (3) is constructed as a chain drive, these chains being located in the interior of the two longitudinal beams or legs (11).

15. Tractor according to one of the claims 1 to 14, characterized in that the rear wheels (3) are hydrostatically driven by means of oil engines.

## Revendications

1. Tracteur à traction sur les roues arrière et/ou sur les quatre roues, caractérisé en ce que pour le transfert du point d'accrochage pour les engins de travaux, la distance étant sensiblement égale entre les axes de le paire de roues avant et la paire de roues arrière, ledit tracteur comprend deux longerons rigides fixés par brides sur l'unité formée par le bloc moteur et la transmission, et orientés en forme de fourche vers l'arrière, sur lesquels sont disposées les roues arrière, et en ce que lesdits longerons fixés par brides présentent des moyens de transmission de la force vers les roues arrière, de telle sorte qu'entre lesdits longerons et devant la ligne axiale de la paire de roues arrière puissent être disposés des moyens de fixation pour des engins de travaux.

2. Tracteur selon la revendication 1, caractérisé en ce que les longerons fixés par brides sont formés par une structure (12) à longerons transversaux fixés à l'arrière du véhicule et par deux longerons longitudinaux (11) latéraux fixés aux extrémités latérales de ladite structure (12).

3. Tracteur selon la revendication 1 ou 2, caractérisé en ce que les roues arrière (3) sont situées sur le côté intérieur des longerons longitudinaux (11).

4. Tracteur selon la revendication 1 ou 2, caractérisé en ce que les roues arrière (3) sont situées sur le côté extérieur des longerons longitudinaux (11).

5. Tracteur selon l'une des revendications précédentes, caractérisé en ce que les deux longerons longitudinaux latéraux sont si longs que leur point d'application sur le châssis du véhicule ou sur la structure (12) des longerons transversaux se situe avant ou au voisinage des arêtes avant des roues arrière (3).

6. Tracteur selon l'une des revendications précédentes, caractérisé en ce que les deux longerons longitudinaux latéraux (11) s'étendent vers l'arrière, au moins approximativement parallèlement à la direction longitudinale du véhicule.

7. Tracteur selon l'une des revendications précédentes, caractérisé en ce que des longerons fixés par bridage s'étendent vers l'arrière, à partir de la partie arrière du véhicule, en direction au moins approximativement horizontale.

8. Tracteur selon l'une des revendications précédentes, caractérisé en ce que les longerons longitudinaux (11) et la structure de longerons transversaux (12) de la fixation des roues (10) présentent un espace creux permettant de recevoir un dispositif d'entraînement (15).

9. Tracteur selon les revendications 2 et 6, caractérisé en ce que l'espace creux de la structure (12) de longerons transversaux est si importante qu'il est possible d'y monter une transmission (18).

10. Tracteur selon l'une des revendications précédentes, caractérisé en ce que la boîte de transmission ainsi que le dispositif d'entraînement (15) sont réalisés selon un mode de construction léger.

11. Tracteur selon l'une des revendications précédentes, caractérisé en ce qu'entre les roues arrière est disposée une chenille d'entraînement ou un mécanisme de propulsion (20), ce dernier étant placé en direction longitudinale de telle sorte que son axe central coïncide avec les axes des roues arrière ou à proximité de ceux-ci, de telle sorte que la facilité de conduite du véhicule n'en soit pas entravée.

12. Tracteur selon l'une des revendications précédentes, caractérisé en ce que la structure (12) en longerons transversaux est intégrée dans le châssis.

13. Tracteur selon l'une des revendications précédentes, caractérisé en ce que sur le châssis du véhicule et/ou sur la fixation de roue (10) sont prévus des dispositifs de montage pour l'accouplement ou la fixation des dispositifs auxiliaires (17, 20, 24, 27, 31, 33).

14. Tracteur selon l'une des revendications précédentes, caractérisé en ce que le dispositif d'entraînement (15) des roues arrière (3) est réalisé sous la forme d'un entraînement à chaînes, lesdites chaînes étant situées à l'intérieur des deux longerons longitudinaux (11).

15. Tracteur selon l'une des revendications 1 à 14, caractérisé en ce que les roues arrière sont entraînées hydrostatiquement au moyen de moteurs hydraulique.
